# EUROPÄISCHE PATENTANMELDUNG

(11) **EP 0 819 608 A1**
(43) Veröffentlichungstag der Anmeldung: **21.01.1998**
(21) Anmeldenummer: 97111159.6
(22) Anmeldetag: 03.07.1997
(51) Int. Cl.: B65B 51/30

(54) **Schlauchbeutelmaschine**

(30) Priorität: 11.07.1996 DE 19627892
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Bei einer Schlauchbeutelmaschine 1 werden die Schweißbacken 7, 8 zur Quernahterzeugung von einem senkrecht zur Folientransportrichtung 4 wirkenden Antrieb 3 über ein bewegliches Element 11 angetrieben. Über einen um einen Drehpunkt 17 drehbaren Hebel 15 wird die Backenkraft (Siegelkraft) deutlich erhöht, und den Bedürfnissen exakt angepaßt.

Bei der erfindungsgemäßen Schlauchbeutelmaschine 1 kann ein Antrieb mit kleiner Kraftaufbringung, z.B. ein Linearmotor 9 in wirtschaftlicher Weise eingesetzt werden.

Durch das Anbringen eines zweiten Antriebes, und Verbindung dieser Antriebe mit einem Hebel (15), können beliebige Bahnkurven der Querbacken erreicht werden, sowie ein kontinuierlicher Ablauf der Maschine. Wird der zweite Antrieb (12) stillgesetzt hat man eine intermittierende Schlauchbeutelmaschine.

## Beschreibung

Die Erfindung betrifft eine Schlauchbeutelmaschine mit einer Folientransporteinrichtung, einer Folienumformeinrichtung, einem Füllrohr, einer Längssiegeleinrichtung, einer Einrichtung zum Verschweißen der Beutelquernähte und einer Trenneinrichtung zum Durchtrennen des Folienschlauches.

Derartige Schlauchbeutelmaschinen sind hinlänglich bekannt. Eine von einer Vorratsrolle abgewickelte Folienbahn wird z. B. an einer Formschulter als Folienumformeintichtung zu einem Folienschlauch umgeformt. Der Folienschlauch wird von der Längssiegeleinrichtung längs verschweißt, durch das Füllrohr mit Produkt befüllt, mittels Querbacken verschweißt, und mit der Trenneinrichtung, z.B. einem Stechmesser, durchtrennt.

Für die gegeneinander gerichtete Bewegung der Querbacken wird ein Elektromotor eingesetzt, der über eine Kurvenscheibe die Backenbewegungen realisiert.

Die bekannte Technik hat den Nachteil, daß für einen Einsatz in Höchstleistungsverpackungsmaschinen Antriebe mit hoher Krafterzeugung notwendig sind, diese Antriebe aber relativ teuer sind. Außerdem haben diese Maschinen heute kurze Siegelzeiten und konstante, große Backenöffnungswege.

Der Erfindung liegt die Aufgabe zu Grunde, einen relativ leistungsschwachen Antrieb für die Bewegung der Querbacken einer Schlauchbeutelmaschine vorzusehen, und trotzdem eine hohe Krafterzeugung zu realisieren. Des weiteren soll der Antrieb auf beide Querbacken gleichartig mit einstellbaren Siegelkräften wirken. Außerdem sollen beliebige Laufbahnen der Querbacken und verschiedene Siegelwege erreicht werden, sowie optimale Querbacken-Öffnungswege.

Gelöst ist die Aufgabe gemäß dem kennzeichnenden Teil des Anspruchs 1. Danach ist ein senkrecht zur Folientransportrichtung wirkender Antrieb mit einem beweglichen Element vorgesehen, ist ein Hebel drehbar mit dem Element verbunden, ist der Hebel in einem Drehpunkt drehbar und ist jeweils eine Schweißbacke der Einrichtung über ein Drehgelenk, unter Ausnutzung einer erhöhten Hebelkraft mit dem Hebel verbunden.

Die Erfindung hat den Vorteil, daß auch bei Einsatz eines kostengünstigen, leistungsschwächeren Antriebs eine hohe Krafterzeugung für die Bewegung der Querbacken einer Schlauchbeutelmaschine realisierbar ist, da ein Hebelmechanismus zu einer Kraftverstärkung führt. Der Antrieb wirkt auf beide Querbacken gleichartig (Zangenbewegung), da beide Querbacken gelenkig mit dem gleichen Hebel verbunden sind, und bei einer durch den Antrieb verursachten Auslenkung des Hebels eine gleichartige Bewegung, z.B. Backenschließen oder Backenöffnen, erfahren. Das bewegliche Element wird vom Antrieb relativ weit bewegt und wieder zurückgestellt. Dadurch kann der Antrieb eine ausreichend große Energie für die Backenbewegung realisieren. Die Backenschließ- bzw. -öffnungsstrecke ist, den relativ geringen Beuteldicken angepaßt, minimiert.

Des weiteren kann der Antrieb in zeitsparender Weise zwecks Erreichen einer Mindestgeschwindigkeit bereits beschleunigen, um die relativ träge Anlaufphase zu durchlaufen, ohne daß eine entsprechende Backenfunktion bereits ausgeführt ist. Das Gleiche gilt für die Verzögerung.

Ist mit dem beweglichen Element eine parallel zur Folientransportrichtung verlaufende Schiene verbunden, und ist an der Schiene ein Schlitten mit einem Gelenk verschiebbar angeordnet (Anspruch 2), so kann durch Verschiebung des Elementes der Hebel verschwenkt werden. Dabei wird der im Gelenk mit dem Schlitten verbundene Hebel vom Antrieb senkrecht zur Folientransportrichtung belastet. Die Schiene führt den Schlitten parallel zur Folientransportrichtung und den Hebel entsprechend seiner Schwenkbewegung um den Drehpunkt ebenfalls in dieser Richtung.

Eine gleiche Druckaufbringung und eine vom Betrag gleiche, jedoch entgegengesetzte Auslenkung der Schweißbacken wird erreicht, wenn gemäß Anspruch 3 der Drehpunkt mittig zwischen den Drehgelenken angeordnet ist. Das Verhältnis der Entfernung zwischen dem Drehpunkt und dem Gelenk einerseits und dem Drehpunkt und einem Drehgelenk andererseits bestimmt den Faktor der Krafterhöhung durch den Hebel.

Ist zusätzlich ein parallel zur Folientransportrichtung wirkender Antrieb vorgesehen, mit dessen beweglichem Element der Drehpunkt verbunden ist (Anspruch 4), so können die Schweißbacken zusätzlich eine Auslenkung parallel zur Folientransportrichtung erfahren. Damit ist eine freie Bahnwahl für die Querbacken in einer Ebene erreicht. Die Bahnen können unterschiedliche Funktionen berücksichtigen, wie z.B. Strippen des Folienschlauches, kürzere oder längere Schweißzeit, schnelles Zurückschwenken der Backen in eine Ausgangsposition für einen Schweißvorgang, und anderes.

Ist der zusätzliche Antrieb abschaltbar und im abgeschalteten Zustand ortsfest (Anspruch 5), so wird die Auslenkung der Schweißbacken parallel zur Folientransportrichtung verhindert, und die Schlauchbeutelmaschine arbeitet in einem getakteten Modus und nicht mehr in einem kontinuierlichen Modus. Im kontinuierlichen Modus werden die Antriebe von einem Rechner (Anspruch 6) aufeinander abgestimmt, so daß jeweils eine vom Rechner vorgegebene Bahnkurve für die Schweißbacken realisiert wird.

Ist an der Schiene beidseits ein Anschlag zum Anschlagen des Schlittens vorgesehen (Anspruch 7), so sind Begrenzungen für die Bewegung der Schweißbacken für deren Bewegung vorgegeben.

Extrem schnelle Bewegungen der Schweißbacken werden erreicht, wenn als Antrieb ein Linearmotor vorgesehen ist (Anspruch 8). Gerade Linearmotoren sind deutlich kostengünstiger, wenn sie eine relativ geringe Kraftaufbringung, z.B. 1000 Newton, realisieren. Linearmotoren mit höherer Kraftaufbringung, z.B. 5000 Newton, sind nicht nur deutlich teurer, sondern belasten auch infolge ihrer großen Masse die Mechanik der Schlauchbeutelmaschine. Trotz zusätzlichem Hebelmechanismus wird ein deutlicher Massen- und Kostenvorteil durch den Einsatz eines Linearmotors mit geringerer Kraftaufbringung erreicht. Eine Geschwindigkeitsreduzierung für die Backenbewegung ist nicht gegeben, da ein Linearmotor extrem schnell beschleunigt, bis zum zwanzigfachen der Erdbeschleunigung.

Die in Richtung der Erdbeschleunigung von einem Antrieb angetriebene Masse wird wieder abgebremst und die Bewegung zurück, entgegengesetzt zur Erdbeschleunigung, wird unterstützt und erfolgt somit schneller, wenn analog Anspruch 9 ein bewegliches Element eines parallel zur Richtung der Erdbeschleunigung wirkenden Antriebs mit einer Feder verbunden ist, die eine nach oben wirkende Federkraft hat. Die Feder nimmt bei einer Abwärtsbewegung des Elementes kinetische Energie vom Element auf und wandelt sie in Federenergie um. Bei der Aufwärtsbewegung gibt sie ihre Energie wieder an das Element ab.

Sind die Schweißbacken Teil der Folientransporteinrichtung, wobei der senkrecht zur Folientransportrichtung wirkende Antrieb für das Schließen und Öffnen der Schweißbacken und der andere Antrieb für den Weitertransport des Folienschlauches und der ebenen Folienbahn vorgesehen ist (Anspruch 10), so ist ein sogenannter Zangenabzug erreicht. Ein Vorteil hierbei ist, daß eine separate Folientransporteinrichtung, wie z.B. ein Riemenabzug, entfallen kann, und die Schweißbacken für den Folientransport benutzt werden.

Sind mehrere Füllrohre mit jeweils einer Folienumformeinrichtung vorgesehen, verlaufen die beiden Schweißbacken quer zu den Folienschläuchen, ist in Folientransportrichtung vor den Folienumformeinrichtungen jeweils ein Folienschneider zwischen zwei Folienumformeinrichtungen vorgesehen, und ist eine einzige Vorratsrolle mit einer aufgewickelten Folienbahn vorgesehen (Anspruch 11), so werden mehrere Vorteile erreicht. Zum einen ist der technische Aufwand für eine sogenannte Mehrfachmaschine mit mehreren Füllrohren gegenüber mehreren Einzelmaschinen deutlich reduziert. Zum anderen wird nur eine Vorratsrolle benötigt, und bei abgewickelter Vorratsrolle werden mittels eines einzigen Wechselvorgangs für die Vorratsrolle wieder alle Füllrohre mit Folie versorgt. Schließlich ersetzen lediglich zwei Schweißbacken für die gesamte Mehrfachmaschine das ansonsten jeweils einem Füllrohr zugeordnete Schweißbackenpaar.

Ist die Schlauchbeutelmaschine eine vertikale Schlauchbeutelmaschine (Anspruch 12), so werden beschriebene Vorteile besonders genutzt, da bei einer derartigen Maschine eine frei wähbare Schweißbackenbewegung für eine Backenrotation, ein Strippen des Folienschlauches oder eine sonstigen Backenfunktion realisiert werden können.

Im folgenden wird die Erfindung anhand von Ausführungsbeispiele darstellenden Figuren näher beschrieben. Es zeigt:

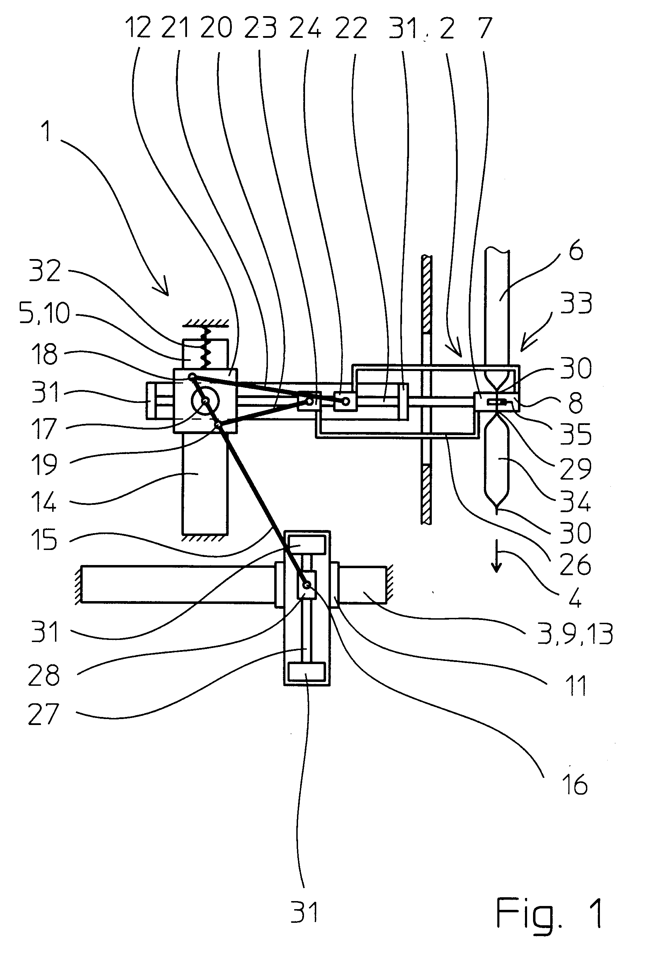

- Figur 1: in einer Seitenansicht eine Einrichtung zum Verschweißen der Beutelquernähte mit zwei Quersiegelbacken einer vertikalen Schlauchbeutelmaschine, mit einem senkrecht und einem parallel zur Folientransportrichtung wirkenden Linearmotor, und einem Hebelsystem zur Erzeugung einer höheren einstellbaren Siegelkraft für die Betätigung der Quersiegelbacken, bei beschlossenen Schweißbacken;

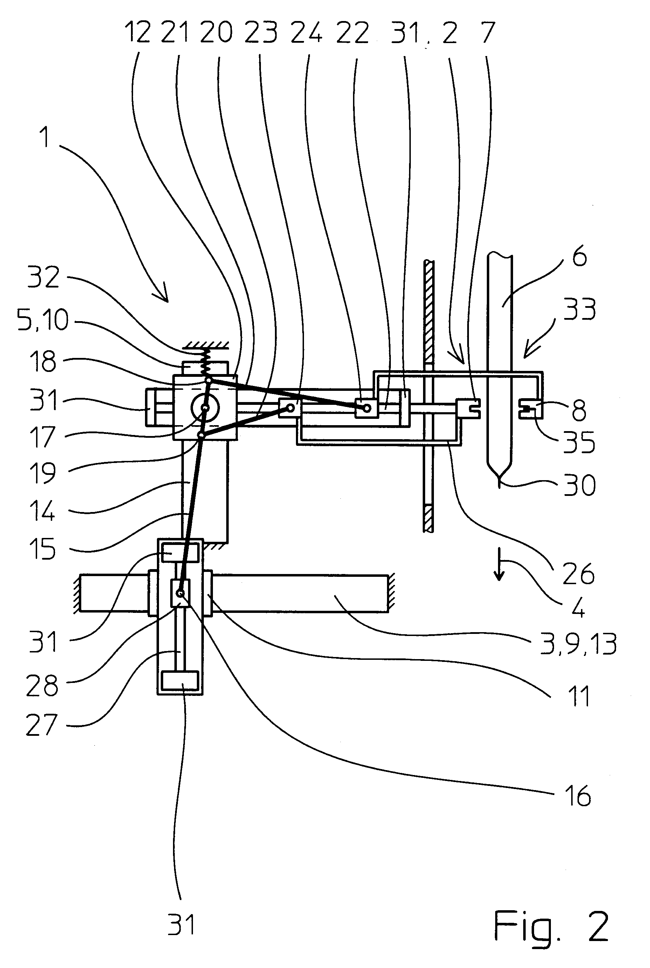

- Figur 2: in einer Seitenansicht den Gegenstand der Figur 1, jedoch in einem Zustand geöffneter Schweißbacken;

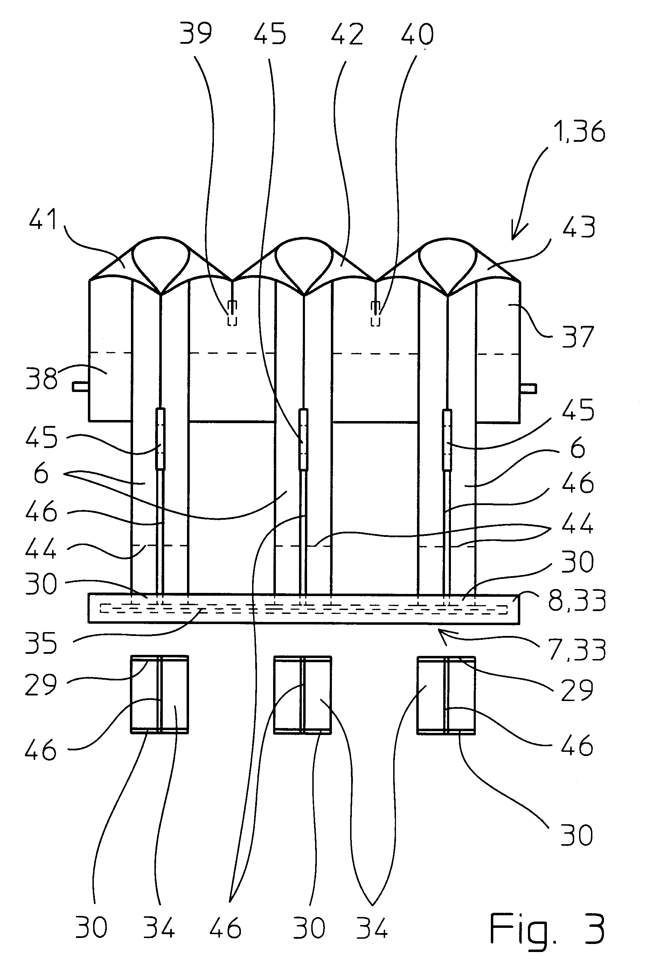

- Figur 3: in einer Seitenansicht eine vertikale Schlauchbeutelmaschine mit drei Füllrohren, wobei für jedes Füllrohr eine Folienumformeinrichtung vorgesehen ist, mit zwei quer zu drei Folienschläuchen verlaufenden Schweißbacken und mit einer einzigen, von einer Vorratsrolle abgewinkelten, und anschließend mit zwei Folienschneidern längs durchtrennter Folienbahn, sowie

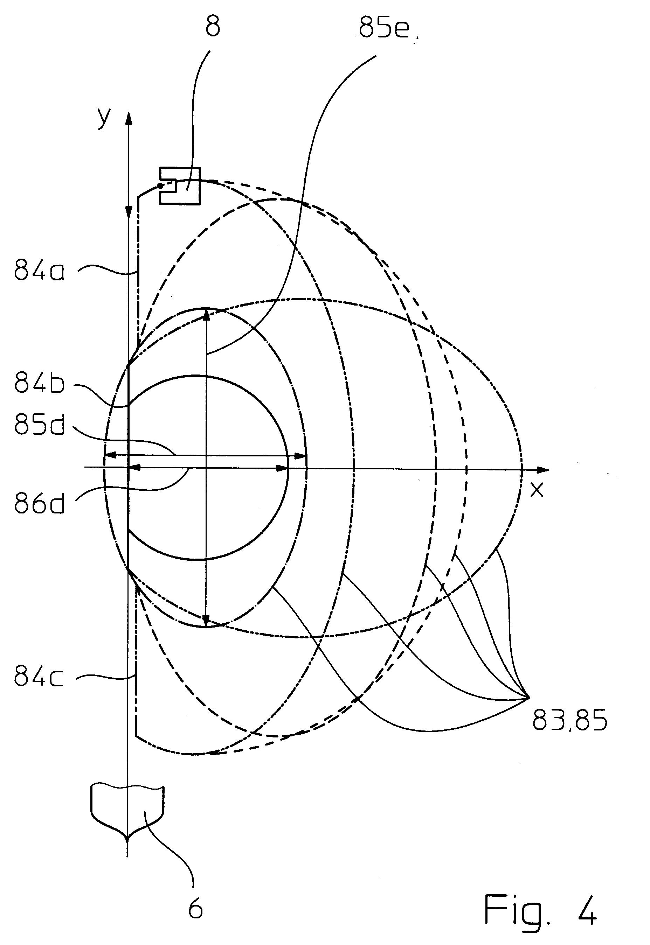

- Figur 4: in einem Koordinatensystem einige der möglichen Bahnen der Schweißbacken, wobei die Bahnen der Schweißbacken parallel zum Folienschlauch durch jeweils mindestens eine gerade Strecke und ansonsten durch eine Ellipsenbahn beschrieben werden.

Bei einer vertikalen Schlauchbeutelmaschine 1 ist die Einrichtung 2 zum Verschweißen der Beutelquernähte sowohl mittels eines Antriebs 3 senkrecht zur Folientransportrichtung 4, als auch mittels eines weiteren Antriebs 5 parallel zur Bewegungsrichtung des Folienschlauches 6 verschiebbar (Figur 1). Die Antriebe 3, 5 werden jeweils separat über einen Rechner angesteuert.

Die Einrichtung 2 weist zwei Schweißbacken 7, 8 auf. Beide Antriebe 3, 5 sind Linearmotoren 9, 10, bestehend aus jeweils einem beweglichen Element 11, 12, und einem das bewegliche Element 11, 12 antreibenden Element 13, 14.

Ein Hebel 15 ist drehbar über ein Gelenk 16 mit dem beweglichen Element 11 des Antriebs 3 verbunden. Des weiteren ist der Hebel 15 in einem Drehpunkt 17 drehbar befestigt. An jeweils einem Drehgelenk 18, 19 sind Stangen 20, 21 mit dem Hebel 15 und mit auf einer Schiene 22 verschiebbaren Schlitten 23, 24 schwenkbar verbunden.

Jeder Schlitten 22, 23 ist wiederum mittels eines Verbindungsstücks 25, 26 jeweils starr mit einer Schweißbacke 7, 8 verbunden.

Der Hebel 15 dient der Erzeugung einer erhöhten Kraft für die Betätigung der Schweißbacken 7, 8.

Mit dem beweglichen Element 11 des Antriebs 3 ist eine parallel zur Folientransportrichtung 4 verlaufende Schiene 27 verbunden. An der Schiene 27 ist ein Schlitten 28 verschiebbar befestigt. Parallel zur Folientransportrichtung 4 wirkt ein weiterer Antrieb 5, mit dessen beweglichem Element 12 der Drehpunkt 17 verbunden ist. Der Drehpunkt 17 ist mittig zwischen den Drehgelenken 18, 19 angeordnet. Der weitere Antrieb 5 ist abschaltbar und im abgeschalteten Zustand ortsfest. Ist er abgeschaltet, so verbleiben die Schweißbacken 7, 8 stets auf gleicher Höhe, z.B. für eine getaktete Verschweißung der Beutelquernähte 29, 30. Ist er eingeschaltet, so ermöglicht er eine Höhenveränderung der Schweißbacken 7, 8 und zusammen mit dem horizontal wirkenden Antrieb 3 lassen sich geschlossene Bahnkurven für die Schweißbackenbewegung realisieren.

Mit dem beweglichen Element 12 des Antriebs 5 ist die Schiene 22 verbunden, welche die Schlitten 23, 24 trägt. Beide Schienen 22, 27 sind mit jeweils zwei Anschlägen 31 versehen.

Das parallel zur Richtung der Erdbeschleunigung bewegliche Element 12 ist an einer Feder 32 aufgehängt.

Die Schweißbacken 7, 8 sind Teil der Folientransporteinrichtung 33, wenn keine Folientransportvorrichtung vorgesehen wird. Der senkrecht zur Folientransportrichtung 4 wirkende Antrieb 3 ist für das Schließen und Öffnen der Schweißbacken 7, 8 vorgesehen, sowie für den einstellbaren Siegeldruck. Der vertikal wirkende Antrieb 5 dient auch dem Weitertransport des Folienschlauches 6.

Ein von den Schweißbacken 7, 8 quer verschweißter, zuvor befüllter Schlauchbeutel 34 wird mittels einer Trenneinrichtung 35 vom Folienschlauch 6 getrennt.

Während des Schweißvorganges wurde der Folienschlauch 6 von den zusammengedrückten Schweißbacken 7, 8 nach unten gezogen. Das Herunterziehen des Folienschlauches 6 wurde durch eine Abwärtsbewegung des beweglichen Elementes 12 bewirkt, das Backenschließen durch eine Auslenkung des beweglichen Elementes 11 nach rechts.

Nach erfolgter Schlauchbeutelabtrennung werden die Schweißbacken 7, 8 durch eine Aufwärtsbewegung des beweglichen Elementes 12 nach oben bewegt und der Folienschlauch 6 wird befüllt (Figur 2). Die Aufwärtsbewegung wird durch die Rückstellkraft der Feder 32 unterstützt. Vor der Aufwärtsbewegung wurden die Schweißbacken 7, 8 durch eine Auslenkung des beweglichen Elementes 11 nach links geöffnet. Oben werden die Schweißbacken 7, 8 wieder geschlossen und verschweißen dann während ihres Wegs nach unten den Folienschlauch 6 und ziehen den Folienschlauch 6 dabei nach unten (bei der Ausführung ohne Folienabzugsvorrichtung).

Die Einrichtung 2 zum Verschweißen der Beutelquernähte 29, 30 wird für eine kontinuierliche Arbeitsweise zum Beispiel auf Bahnen 83 bewegt, die während einer Bewegung am Schlauch 6 zueinander parallel Geraden 84a, 84b, 84c entsprechen, und die in einer Ellipsenbahn 85 geschlossen sind (Figur 4). Der Ellipsendurchmesser 85d ist in Richtung senkrecht zur Folientransportrichtung 4 kleiner als der Ellipsendurchmesser 85e in Richtung parallel zu dieser Richtung. Die Wegdistanz 86d in der Richtung senkrecht zum Schlauch 5 der Einrichtungen 1 zum Verschweißen der Beutelquernähte 2 wird abhängig von der Dicke der erzeugten Beutel vorgegeben.

Unmittelbar vor einem Querschweißvorgang werden bei einer vertikalen Schlauchbeutelmaschine zum Beispiel die Einrichtungen 2 zum Verschweißen der Beutelquernähte 29, 30 parallel zum Folienschlauch 6 und ohne Berührungskontakt zum Schlauch 6 nach unten entlang der Bahn 84a bewegt. Dabei haben sie eine größere Relativgeschwindigkeit als der Schlauch 6. Mittels eines mit der Einrichtung 1 verbundenen (nicht dargestellten) Produktabstreifers oder der Schweißbacke selbst, wird dabei über den Schlauch 6 gestreift und im Schlauch 6 vorhandenes Schüttgut zusätzlich nach unten bewegt.

Mit der Einrichtung 2 kann auch eine Nahtkühlung erreicht werden. Dazu werden nach einem Querschweißvorgang die Einrichtungen 2 zum Verschweißen der Beutelquernähte 29, 30 entlang der Bahn 84c parallel zum Schlauch 6 ohne Berührungskontakt zum Schlauch 6 positioniert, wobei sie die gleiche Relativgeschwindigkeit wie der Schlauch 6 haben. In dieser Positionierung wird mittels eines mit der Einrichtung 2 verbundenen (nicht dargestellten) Kühlluftauslasses eine Beutelquernaht 29, 30 gekühlt.

Bei einem weiteren Ausführungsbeispiel (Figur 3) ist die vertikale Schlauchbeutelmaschine 1 als Mehrfachmaschine 36 ausgestaltet. Mittels der als Folientransporteinrichtung 33 dienenden Schweißbacken 7, 8 wird eine ebene Folienbahn 37 von einer Vorratsrolle 38 abgewickelt und durch Passieren von zwei Folienschneidern 39, 40 längs durchtrennt. An drei Folienumformeinrichtungen 41, 42, 43 werden die drei erhaltenen Folienbahnen jeweils zu einem Folienschlauch 6 umgeformt. Mittels jeweils einer gegen ein Füllrohr 44 und den Folienschlauch 6 wirkenden Längssiegeleinrichtung 45 werden die Folienschläuche 6 unter Bildung einer Längsnaht 46 längs verschweißt.

Die beiden Schweißbacken 7, 8 verlaufen quer zu den drei Folienschläuchen 6 und erzeugen während eines Schweißvorganges gleichzeitig die kopfseitigen Beutelquernähte 29 der bereits gefüllten drei Schlauchbeutel 34 und die bodenseitigen Beutelquernähte 30 der nachfolgenden drei Schlauchbeutel. Eine Trenneinrichtung 35 in einer Schweißbacke 8 durchtrennt alle drei Folienschläuche 6.

Die beiden Schweißbacken 7, 8 werden analog dem Ausführungsbeispiel der Figuren 1 und 2 angetrieben.
- 1: vertikale Schlauchbeutelmaschine
- 2: Einrichtung zum Verschweißen
- 3: Antrieb
- 4: Folientransporteinrichtung
- 5: Antrieb
- 6: Folienschlauch
- 7, 8: Schweißbacke
- 9, 10: Linearmotor
- 11, 12: bewegliches Element
- 13, 14: antreibendes Element
- 15: Hebel
- 16: Gelenk
- 17: Drehpunkt
- 18, 19: Drehgelenk
- 20, 21: Stange
- 22: Schiene
- 23, 24: Schlitten
- 25, 26: Verbindungsstück
- 27: Schiene
- 28: Schlitten
- 29, 30: Beutelquernaht
- 31: Anschlag
- 32: Feder
- 33: Folientransporteinrichtung
- 34: Schlauchbeutel
- 35: Trenneinrichtung
- 36: Mehrfachmaschine
- 37: Folienbahn
- 38: Vorratsrolle
- 39, 40: Folienschneider
- 41, 42, 43: Folienumformeinrichtung
- 44: Füllrohr
- 45: Längssiegeleinrichtung
- 46: Längsnaht
- 83: Bahn
- 84a, 84b, 84c: Gerade
- 85: Ellipsenbahn
- 85d, 85e: Ellipsendurchmesser
- 86d: Wegdistanz

## Patentansprüche

1. Schlauchbeutelmaschine mit einer Folientransporteinrichtung, einer Folienumformeinrichtung, einem Füllrohr, einer Längssiegeleinrichtung, einer Einrichtung zum Verschweißen der Beutelquernähte und einer Trenneinrichtung, dadurch gekennzeichnet, daß ein senkrecht zur Folientransportrichtung (4) wirkender Antrieb (3) mit einem beweglichen Element (11) vorgesehen ist, daß ein Hebel (15) drehbar mit dem Element (11) verbunden ist, daß der Hebel (15) in einen Drehpunkt (17) drehbar befestigt ist, und daß jeweils eine Schweißbacke (7, 8) der Einrichtung (2) über ein Drehgelenk (18, 19) unter Ausnutzung einer erhöhten Hebelkraft mit dem Hebel (15) verbunden ist.

2. Schlauchbeutelmaschine nach Anspruch 1, dadurch gekennzeichnet, daß mit dem beweglichen Element (11) eine parallel zur Folientransporteinrichtung (4) verlaufende Schiene (27) verbunden ist, und an der Schiene (27) ein Schlitten (28) mit einem Gelenk (16) verschiebbar angeordnet ist.

3. Schlauchbeutelmaschine nach Anspruch 1 oder Anspruch 2, dadurch gekennzeichnet, daß der Drehpunkt (17) mittig zwischen den Drehgelenken (18, 19) angeordnet ist.

4. Schlauchbeutelmaschine nach Anspruch 1, Anspruch 2 oder Anspruch 3, dadurch gekennzeichnet, daß ein parallel zur Folientransportrichtung (4) wirkender Antrieb (5) vorgesehen ist, mit dessen beweglichem Element (12) der Drehpunkt (17) verbunden ist.

5. Schlauchbeutelmaschine nach Anspruch 4, dadurch gekennzeichnet, daß der Antrieb (5) abschaltbar und im abgeschalteten Zustand ortsfest ist.

6. Schlauchbeutelmaschine nach Anspruch 1 oder Anspruch 4, dadurch gekennzeichnet, daß ein Rechner mit dem Antrieb bzw. den Antrieben verbunden ist.

7. Schlauchbeutelmaschine nach Anspruch 1 bis Anspruch 4, dadurch gekennzeichnet, daß eine einstellbare Siegelkraft erzeugt wird durch die Regelung der Schubkraft des Linearmotors (3) oder eine entsprechende Lineareinheit in der Stellung in der die Schweißbacken (7, 8) gegeneinander wirken und die Verfahrgeschwindigkeit des Elements (11) gleich Null ist.

8. Schlauchbeutelmaschine nach Anspruch 2, dadurch gekennzeichnet, daß an der Schiene (22, 31) jeweils ein Ende der Schiene (22, 31) begrenzender Anschlag (31) zum Anschlagen des Schlittens (23, 24) vorgesehen ist.

9. Schlauchbeutelmaschine nach Anspruch 1 oder Anspruch 4, dadurch gekennzeichnet, daß als Antrieb (3, 5) ein Linearmotor (9, 10) oder eine den Linearmotor ersetzende Lineareinheit vorgesehen ist.

10. Schlauchbeutelmaschine nach Anspruch 1 oder Anspruch 4, dadurch gekennzeichnet, daß ein bewegliches Element (12) eines parallel zur Richtung der Erdbeschleunigung wirkenden Antriebs (5) mit mindestens einer Feder (32) verbunden ist, die eine nach oben wirkende Federkraft hat.

11. Schlauchbeutelmaschine nach Anspruch 4, dadurch gekennzeichnet, daß die Schweißbacken (7, 8) Teil der Folientransporteinrichtung (33) sind, wobei der senkrecht zur Folientransporteinrichtung (4) wirkende Antrieb (3) für das Schließen und Öffnen der Schweißbacken (7, 8) und der andere Antrieb (5) für den Weitertransport des Folienschlauches (6) und der ebenen Folienbahn (37) vorgesehen ist.

12. Schlauchbeutelmaschine nach Anspruch 1 oder Anspruch 4 sowie nach Anspruch 10, dadurch gekennzeichnet, daß mehrere Füllrohre (44) mit jeweils einer Folienumformeinrichtung (41, 42, 43) vorgesehen sind, daß die beiden Schweißbacken (7, 8) quer zu den Folienschläuchen (6) verlaufen, daß in Folientransportrichtung (4) vor den Folienumformeinrichtungen (41, 42, 43) jeweils ein Folienschneider (39, 40) zwischen zwei Folienumformeinrichtungen (41, 42, 43) vorgesehen ist, und daß eine einzige Vorratsrolle (38) mit einer aufgewickelten Folienbahn (37) vorgesehen ist.

13. Schlauchbeutelmaschine nach Anspruch 1, dadurch gekennzeichnet, daß die Schlauchbeutelmaschine (1) eine vertikale Schlauchbeutelmaschine (1) ist.

14. Schlauchbeutelmaschine nach Anspruch 1 oder Anspruch 4, dadurch gekennzeichnet, daß die Antriebe (3, 5) beliebige Querbackenbahnen (83, 85, 84a, 84c, 84b) erzeugen.
